# EUROPÄISCHE PATENTSCHRIFT

(11) **EP 3 433 189 B1**
(45) Veröffentlichungstag und Bekanntmachung des Hinweises auf die Patenterteilung: **30.07.2025**
(21) Anmeldenummer: 16815792.3
(22) Anmeldetag: 13.12.2016
(51) Int. Cl.: B65G 47/86

(54) **TRANSPORTVORRICHTUNG ZUM TRANSPORTIEREN VON BEHÄLTERN**
TRANSPORTING DEVICE FOR TRANSPORTING CONTAINERS
DISPOSITIF DE TRANSPORT POUR TRANSPORTER DES RÉCIPIENTS

(43) Veröffentlichungstag der Anmeldung: 30.01.2019
(73) Patentinhaber: Tyrolon GmbH, 6395 Hochfilzen (AT)
(72) Erfinder: SCHULNIG, Elmar, 6391 Fieberbrunn (AT)
(74) Vertreter: Meissner Bolte Partnerschaft mbB
(86) Internationale Anmeldenummer: PCT/EP2016/080810
(87) Internationale Veröffentlichungsnummer: WO 2018/108248

(56) Entgegenhaltungen:
- EP-A1- 2 769 942
- EP-A1- 2 769 942
- EP-A1- 2 881 345
- EP-A1- 2 881 345
- EP-A1- 2 907 777
- EP-A1- 2 907 777
- WO-A1-2010/048765
- WO-A1-2010/048765
- DE-A1- 102014 111 564
- DE-A1- 102014 111 564

## Beschreibung

Die vorliegende Erfindung betrifft eine Transportvorrichtung zum Transportieren von Behältern mit mehreren Greifeinrichtungen zum Greifen, Halten und Führen von insbesondere flaschenartigen Behältern.

Greifeinrichtungen zum Greifen, Halten und/oder Führen von insbesondere rund geformten Behältern, auch als "Klammereinheit" bezeichnet, sind bereits aus dem Stand der Technik bekannt und werden bei der fließbandtechnischen Bearbeitung von Behältern verwendet.

Unter dem Begriff "Behälter" sind im Zusammenhang mit der vorliegenden Erfindung insbesondere, aber nicht ausschließlich Behälter mit einem im Wesentlichen kreisförmigen Querschnitt zu verstehen, z. B. Flaschen, Dosen oder Gläser, die jeweils den Gepflogenheiten entsprechend aus Glas, Metall oder Kunststoff bestehen können. Es können auch kleine Behälter wie Fläschchen oder kleine Dosen darunter verstanden werden, die insbesondere in der Pharmazie oder Kosmetikindustrie verwendet werden.

Unter dem Begriff "im Wesentlichen/insbesondere rund geformt" sind im Zusammenhang mit der vorliegenden Erfindung nicht ausschließlich im geometrischen Sinne rund geformte Behälter zu verstehen, sondern beispielsweise auch ovale, regelmäßig vieleckige, usw., welche dann insbesondere einen im Wesentlichen kreisförmigen, beispielsweise aber auch ovalen oder vieleckigen Querschnitt aufweisen.

Der nachfolgend verwendete Begriff "schwenkbar" oder "drehbar" verweist auf die Fähigkeit bzw. Merkmal eines Bauteils, um eine Achse bewegbar (rotierbar) oder beweglich zu sein.

Unter die fließbandtechnische Bearbeitung von Behältern fällt unter anderem das Reinigen, Befüllen und Verschließen dieser Behälter. Beim Reinigen, Befüllen oder Verschließen werden die Behälter bei einer Eingangsstation mittels einer aus dem Stand der Technik bekannten Greifeinrichtung mit mindestens einem Greifarmpaar gegriffen und zur nächsten Station im Bearbeitungsprozess transportiert. Eine solche Greifeinrichtung für ein Behältertransportsystem besitzt wenigstens zwei Greifarme und kann zwischen einer Greifstellung und einer Öffnungsstellung wechseln. Um einen Behälter zu transportieren, greifen die Greifarme normalerweise unterhalb des Halskragens, insbesondere bei Flaschen, und/oder um den Bauch des Behälters. Ein Steuernocken fungiert hierfür als Öffnungsmittel, und eine Spiralfeder als Schließmittel der Greifeinrichtung. Die Federkraft der Spiralfeder dient dabei nicht nur dem Schließen der Greifeinrichtung, sondern auch dem kraftschlüssigen Halten des Behälters. Daher ist die Federkraft entsprechend groß bemessen. Wenn die Greifeinrichtung durch den Steuernocken geöffnet bzw. in die Öffnungsstellung überführt wird, wird eine Kraft gegen eine Greifarminnenseite des Greifarms entgegen der Federkraft aufgewendet. Um die Greifeinrichtung in die Greifstellung zu überführen, wird der Steuernocken derart gedreht, dass das Greifarmpaar der Greifeinrichtung durch den Steuernocken nicht mehr ausgelenkt bzw. gespreizt und die Greifarme durch das Schließmittel aufeinander zubewegt und geschlossen werden.

Auf Grund der zahlreichen Komponenten des Greifarms und der Greifeinrichtung sind deren Herstellungs- und Installationskomplexität sowie deren Wartungs- und Reinigungsaufwand relativ hoch. Der sich auf den Greifarmpaaren sammelnde Schmutz befindet sich insbesondere in Vertiefungen, Ecken und zwischen den Komponenten und ist bei hygienesensiblen Vorgängen wie dem Abfüllen von Medikamenten oder Hygieneartikeln, aber auch von Lebensmitteln, unerwünscht. Außerdem ist eine Verkleinerung des Greifarms oder der Greifeinrichtung, die beim Führen und Halten von kleinen Fläschchen von Vorteil ist, wegen der Spiralfeder oder dem Steuernocken und dessen Platzbedarf nicht ohne weiteres möglich. Eine Transportvorrichtung nach dem Oberbegriff von Anspruch 1 ist aus EP 2 881 345 A1 bekannt.

Es ist daher die Aufgabe der vorliegenden Erfindung eine Transportvorrichtung der eingangs genannten Art in vorteilhafter Weise weiterzubilden, insbesondere dahingehend, dass eine Miniaturisierung des Greifarms und eine Reduzierung der Anzahl von Bauteilen einer Greifeinrichtung ermöglicht werden, und dass insbesondere die Greifeinrichtung wartungsarm und dessen Struktur und Installation vereinfacht wird. Ebenso soll die Steuerung eines Greifarms und der Greifeinrichtung vereinfacht und flexibler ausgebildet werden.

Diese Aufgabe wird erfindungsgemäß durch eine Transportvorrichtung mit den Merkmalen des Anspruchs 1 gelöst.

Danach ist vorgesehen, dass ein Greifarm für eine Greifeinrichtung zum Greifen, Halten und Führen von insbesondere flaschenartigen und/oder rund geformten Behältern bereitgestellt wird, welcher mit einer Bohrung zur Aufnahme eines Lagerelements zum Befestigen des Greifarms in der Greifeinrichtung und mit einer Aufnahme für ein Schließmittel zum Bewegen des Greifarms von einer Öffnungsstellung in eine Greifstellung versehen ist. Dabei ist die Bohrung derart ausgebildet, ein als Schwenkwelle ausgebildetes und/oder fungierendes Lagerelement aufzunehmen und sich mit dem Lagerelement verdrehsicher zu verbinden, um eine Schwenkbewegung des Lagerelements zum Bewegen des Greifarms von der Greifstellung in die Öffnungsstellung auf den Greifarm zu übertragen.

Der Greifarm selbst ist zumindest begrifflich in verschiedene Regionen unterteilbar oder aber auch in einzelne Komponenten unterteilt, insbesondere in einen Greifarmkörper mit der genannten Bohrung und der Aufnahme sowie in einen Greifabschnitt mit mindestens einem Greiffinger zum Greifen und Halten eines Behälters.

Im Vergleich zum Stand der Technik wird der Greifarm der erfindungsgemäßen Transportvorrichtung über eine Schwenkwelle angesteuert, wodurch auf den bislang in einer Greifeinrichtung verwendeten Steuernocken (mit eigener Drehachse) und auf eine Ansteuerungsfläche am Greifarm für den Steuernocken verzichtet werden kann. Der Greifarm bietet somit den Vorteil, dass eine Miniaturisierung eines Greifarms für eine Greifeinrichtung ermöglicht wird. Somit können die Bohrung, die Aufnahme für ein Schließmittel sowie der Greifabschnitt unmittelbar nebeneinander angeordnet werden, wodurch die Länge des Greifarms zwischen Bohrung und Greifabschnitt reduziert wird. Durch den Wegfall der Ansteuerungsfläche kann die Aufnahme für das Schließmittel näher bzw. unmittelbar neben der Bohrung ausgebildet sein. Dadurch kann ein Schließmittel, insbesondere ein Magnetpaar, in der Öffnungsstellung oder beim Greifen näher zueinander liegen und somit eine viel größere Haltekraft (Anziehungs- bzw. Zugkraft zwischen den Magneten) auf die zu transportierenden Behälter ausüben. Schwere, gefüllte und unhandliche Behälter, die z.B. keine Rillen oder Vertiefungen zum besseren Greifen aufweisen, können somit stabiler und sicherer gehalten werden.

Auf Grund der geringeren Anzahl an Bauteilen und Komponenten des Greifarms und der Greifeinrichtung der erfindungsgemäßen Transportvorrichtung wird ein schlichterer Aufbau des Greifarms als auch der Greifeinrichtung ermöglicht, der einfacher herzustellen, zu installieren und zu warten ist. Die Bohrung des Greifarms und insbesondere die Schwenkwelle sind derart ausgebildet, nicht nur den Greifarm an einer bestimmten Stelle zu positionieren, sondern auch die Schwenkwelle mit der Bohrung verdrehsicher, insbesondere formschlüssig und/oder kraftschlüssig oder stoffschlüssig, zu verbinden, um eine Schwenkbewegung der Schwenkwelle auf den Greifarm (und umgekehrt) zu übertragen. Somit werden zwei Funktionen in einer Komponente, der Bohrung bzw. das als Schwenkwelle fungierende Lagerelement, vereint. Außerdem werden im Vergleich zum Stand der Technik die Anzahl an bewegbaren bzw. schwenkbaren Komponenten verringert und der Greifarm und die Greifeinrichtung wartungsärmer und - freundlicher. Unter dem Begriff "formschlüssig" versteht man unter anderem eine nicht-lösbare Verbindung, wie z.B. eine Presspassung der Schwenkwelle in der Bohrung, oder eine lösbare Verbindung, in der eine derart ausgebildete Form der Schwenkwelle in eine komplementär ausgebildete Form der Bohrung einsetzbar ist und eine Drehung der Schwenkwelle auf den Greifarm übertragbar ist. Z.B. der Querschnitt der Schwenkwelle und der der Bohrung weisen zumindest teilweise eine Stern-, Ellipsen-, Vieleck- oder Quadratform (oder andere Formen) auf, um gemeinsam eine lösbare und verdrehsichere Verbindung zu ermöglichen. Bei einer lösbaren verdrehsicheren Verbindung ergibt sich der Vorteil, dass Greifarme schneller ausgetauscht werden können und die Schwenkwelle hierbei nicht ersetzt werden muss. Unter dem Begriff "stoffschlüssig" versteht man unter anderem die entstehende Stoffverbindung bei einem Löten, Schweißen oder Kleben.

Ein weiterer Vorteil des Greifarms der erfindungsgemäßen Transportvorrichtung liegt darin, dass Ablagerungen von Schmutz und Dreck insbesondere beim Betrieb der Vorrichtung reduziert werden und die Greifeinrichtung erst nach längeren Zeiträumen gereinigt werden muss und somit wartungsärmer ist. Insbesondere bietet der erfindungsgemäße Greifarm den Vorteil, dass Vertiefungen, in denen sich vorzugsweise Schmutz, Staub und/oder andere Verschmutzungen sammeln, zum einen fast vollständig entfernt und/oder zum anderen von den zu greifenden Behältern abgewandt sind. Im Ergebnis werden die Ansatzflächen für Keime und Verschmutzungen wie z.B. Oberflächenvertiefungen erheblich reduziert. Hierdurch ergibt sich eine Greifeinrichtung, die höchsten Hygieneanforderungen gerecht wird, weil die Greifeinrichtung mit Greifarmen versehen sein kann, die keinen bzw. wenig Schmutz anziehen bzw. nicht zur Verschmutzung an prozessrelevanten Stellen neigen. Damit geht eine erhebliche Reduzierung der Reinigungsarbeiten einher, da der Greifarm mit weniger Komponenten konzipiert ist.

Eine Greifeinrichtung, die den Greifarm umfasst, ist insbesondere Teil einer auch als "Klammerstern" bezeichneten Transportvorrichtung bzw. eines Behältertransportsystems. Die von der Transportvorrichtung gehaltenen Behälter können während des Transports gereinigt, befüllt oder verschlossen und/oder zur nächsten Station im Prozess transportiert werden.

Vorteilhafte Weiterbildungen der Erfindung sind in den Unteransprüchen angegeben. Dabei ist festzuhalten, dass die verschiedenen Ausführungsformen und insbesondere deren Merkmale jeweils miteinander kombinierbar sind.

So weist der Greifarm wenigstens einen Wirkeingriffsabschnitt, insbesondere einen Verzahnungsabschnitt mit zumindest segmentweise koaxial um die Bohrung an der Greifarminnenseite angeordneten Zähnen, zum synchronen Schwenken des Greifarms mit einem gegengleich ausgebildeten Greifarm der Greifeinrichtung auf. Der Vorteil der Ausführung liegt darin, dass die Schwenkbewegung des ersten Greifarms auf den zweiten Greifarm synchron übertragen wird und der zweite Greifarm keinen Steuernocken oder ähnliches als Öffnungsmittel braucht. Durch die Ausbildung des Wirkeingriffsabschnitts am Greifarm kann die Schwenkbewegung des ersten Greifarms direkt auf den zweiten Greifarm übertragen werden.

Zusätzlich zum Wirkeingriffsabschnitt am Greifarm, weist des Weiteren die Schwenkwelle wenigstens einen Wirkeingriffsabschnitt, insbesondere einen Verzahnungsabschnitt mit zumindest segmentweise koaxial um die Schwenkwelle an der Greifarminnenseite angeordneten Zähnen, zum synchronen Schwenken des Greifarms mit einer Schwenkwelle eines gegengleich ausgebildeten Greifarms der Greifeinrichtung auf. Identisch zur vorherig genannten vorteilhaften Weiterbildung liegt der Vorteil dieser Ausführung insbesondere darin, dass die Schwenkbewegung des ersten Greifarms auf den zweiten Greifarm synchron übertragen wird und der zweite Greifarm keinen Steuernocken oder ähnliches als Öffnungsmittel braucht. Des Weiteren ergibt sich der Vorteil, dass der Wirkbereichsabschnitt auf Grund seiner Anordnung bzw. Ausbildung an der Schwenkwelle nicht unbedingt in dem Wirk- bzw. Bewegungsbereich der Greifarme liegt und somit vor Verschmutzungen besser geschützt ist. Der Wirkeingriffsabschnitt kann entweder direkt an der Schwenkwelle ausgebildet oder ringfömig und auf die Welle aufschiebbar bzw. an dieser befestigbar sein.

Es hat sich ebenfalls als vorteilhaft herausgestellt, wenn an der Schwenkwelle ein Betätigungselement zum Ansteuern der Schwenkwelle ausgebildet ist. Dadurch muss die Schwenkwelle an sich nicht direkt angesteuert werden, da die Welle schwer greifbar sein kann. Die Welle kann als eine geradlinige und zumindest teilweise zylinderförmige Stange ausgebildet sein. Stattdessen wird ein Betätigungselement bereitgestellt, das abhängig vom Ansteuerungsmechanismus zum Öffnen einer Greifeinrichtung ausgebildet ist und somit eine Art zuverlässigen und robusten Schalter darstellt. Hierbei kann das Betätigungselement zylinderförmig, insbesondere rotierbar und/oder aus Kunststoff oder mit einer Kunststoffschicht zur Dämpfung bei einem Zusammenwirken mit einer Ansteuerungsvorrichtung, ausgebildet sein. Hierbei kann das Betätigungselement vorzugsweise über einen Betätigungshebel mit der Schwenkwelle, insbesondere an dessen Ende oder Anfang, fest verbunden sein, um die Ansteuerung des Greifarms mittels einer passenden Hebelkraft und eines Hebelwegs auf die Schwenkwelle zu verbessern, d.h. die Ansteuerung langsamer, schneller oder auch präziser zu gestalten.

Vorzugsweise weist der Greifarm einen derart ausgebildeten Greifabschnitt auf, der um eine senkrecht zur Bohrung verlaufende Schwenkachse schwenkbar gelagert ist. Dadurch können Behälter in einer schrägen oder gekippten Lage durch die Greifarme einer Greifeinrichtung stabil und zuverlässig gegriffen und gehalten werden. Hierbei kann die Schwenkachse als Verbindungsglied zwischen Greifarmkörper und Greifabschnitt fungieren, wobei zumindest der Greifarmkörper oder der Greifarmabschnitt um die Schwenkachse schwenkbar gelagert ist. Die Schwenkachse kann entweder als separates Bauteil oder einteilig mit dem Greifarmkörper oder einteilig mit dem Greifabschnitt ausgebildet sein. Der schwenkbare Greifabschnitt birgt ebenfalls den Vorteil, dass die mindestens zwei Greiffinger nur noch mit einem Greifarmkörper verbunden sind und nicht jeder Greiffinger über einen eigenen Greifarmkörper bewegt werden muss.

Des Weiteren ist die Aufnahme vorzugsweise als zwischen dem Greifabschnitt und der Bohrung, insbesondere in einem Greifarmkörper des Greifarms, angeordnetes Sackloch ausgebildet. Diese Form der Aufnahme erlaubt es, Schließmittel, insbesondere einen Magneten, ohne weitere Befestigungsmittel und lediglich durch eine Presspassung in dem Greifarm bzw. dem Greifarmkörper zu befestigen.

Vorteilhafterweise ist das Schließmittel als ein Magnet eines sich anziehenden oder abstoßenden Magnetpaares ausgebildet. Der Magnet kann als Permanentmagnet oder eine ein magnetisches Feld erzeugende Spule mit/oder ohne Kern sein. Dadurch wird eine berührungslose Kraftwirkung - Abstoßung oder Anziehung - zwischen den Greifarmen einer Greifeinrichtung erreicht, die für die Aufrechterhaltung der Hygiene von Vorteil ist. Bei einem anziehenden Magnetpaar ist der Magnet und somit dessen Aufnahme zwischen Greifabschnitt und Bohrung und bei einem abstoßenden Magnetpaar auf der zur Bohrung gespiegelten Seite des Greifarms bzw. zwischen dem Ende des Greifarms und der Bohrung angeordnet.

Es hat sich ebenfalls als vorteilhaft herausgestellt, wenn die Schwenkwelle und der Greifarm zusammen einstückig ausgebildet sind. Dadurch kann der Greifarm, insbesondere der Greifarmkörper, in einem Stück z.B. durch ein Kunststoffspritzgussverfahren und insbesondere aus faserverstärktem Kunststoff kostengünstig gefertigt und ohne weiteres in eine Greifeinrichtung eingesetzt und angesteuert werden. Hierbei entfallen das Ausbilden der Bohrung im Greifarm und das Einsetzen und das verdrehsichere Verbinden der Schwenkwelle mit dem Greifarm, wodurch Zeit und Geld gespart werden. Das bedeutet, dass im Vergleich zum Stand der Technik der Greifarm der erfindungsgemäßen Transportvorrichtung auch ohne Bohrung hergestellt werden kann; vorausgesetzt eine Achse oder Welle wird am Greifarm bei dessen Herstellung ausgebildet. Ebenso kann auf die Bohrung verzichtet werden, wenn die Schwenkwelle und/oder der Greifarm eine passende Aufnahme oder Einrichtung zum gegenseitigen verdrehsicheren Verbinden aufweist.

Der Greifarmkörper des Greifarms kann aus Kunststoff oder Metall, insbesondere Edelstahl, gefertigt sein. Das gleiche gilt für den Greifabschnitt des Greifarms. So werden bei hygienesensiblen Transportvorgängen bzw. -vorrichtungen Greifarme, insbesondere der Greifkörper, aus Metall bevorzugt. Ein Schließmittel, insbesondere ein Dauermagnet, kann in den Greifarmkörper eingesetzt und mit einem Metalldeckel abgedeckt werden. Dieser Deckel wird anschließend mit dem Greifarmkörper z.B. Laser verschweißt, um Schmutz anziehende Vertiefungen im Greifarm zu vermeiden. Ein Greifabschnitt aus Kunststoff hat auf Grund seiner Elastizität und/oder rutschfesten Oberfläche den Vorteil, einen stabileren Griff am/um den Behälter zu erzielen, ohne den Behälter beim Greifen oder Transportieren zu beschädigen.

Hierbei ergeben sich die bereits zuvor genannten Vorteile, dass die Anzahl der Komponenten gegenüber herkömmlichen Greifeinrichtungen kleiner ist und das Öffnungsmittel gleichzeitig als Lager- und/oder Befestigungselement für einen Greifarm einer Greifeinrichtung, insbesondere in einer Transportvorrichtung, dienen kann.

Die vorliegende Erfindung bezieht sich des Weiteren auf eine Transportvorrichtung zum Transportieren von Behältern mit mehreren Greifeinrichtungen, mit einer Trägerplatte zum Aufnehmen der Greifeinrichtungen, mit einer Antriebswelle zum Drehen der Trägerplatte und mit einer Ansteuerungsvorrichtung zum Steuern der jeweiligen Betätigungselemente. Die Ansteuerungsvorrichtung wird insbesondere auf Grund ihrer Form auch als Kurveneinrichtung, -steuerung, -element bzw. -bauteil bezeichnet. Hierbei ergibt sich der Vorteil, dass die Transportvorrichtung geeignet ist, ohne weitere Modifikationen sowohl im Uhrzeigersinn als auch gegen den Uhrzeigersinn drehbar und zum Transport verwendbar zu sein. Dies liegt insbesondere an der Form und der Ausbildung der Ansteuerungsvorrichtung sowie des Betätigungselements der Greifeinrichtungen, wodurch die Ansteuerungsvorrichtung und das Betätigungselement unabhängig vom Drehsinn der Trägerplatte miteinander in Eingriff kommen und die Greifeinrichtungen dadurch steuern können.

Die Ansteuerungsvorrichtung ist in einer Position fixiert und derart ausgebildet, jedes Betätigungselement zwischen einer ersten und einer zweiten Position/Winkelstellung der entsprechenden Greifeinrichtung anzusteuern, so dass die Greifeinrichtung in die Öffnungsstellung versetzt, über einen bestimmten Winkel in der Öffnungsstellung gehalten und anschließend in die Greifstellung überführt wird.

Des Weiteren ist es vorteilhaft, wenn die Trägerplatte für jede Greifeinrichtung zwei Lagerbohrungen zum drehbaren Lagern der Schwenkwellen aufweist, und wobei der Wirkeingriffsabschnitt der Schwenkwellen unterhalb der Trägerplatte angeordnet ist. Hierbei wird eine kostengünstige Herstellung der Trägerplatte ermöglicht, da lediglich zwei Bohrungen für die Schwenkwellen der jeweiligen Greifeinrichtungen notwendig sind.

Als vorteilhaft hat sich eine alternative Ausformung der Trägerplatte gezeigt, in der die Trägerplatte für jede Greifeinrichtung zwei Lagerbohrungen zum drehbaren Lagern der Schwenkwellen sowie eine die beiden Lagerbohrungen verbindende Senkbohrung aufweist, und wobei der Wirkeingriffsabschnitt der Schwenkwellen der jeweiligen Greifeinrichtungen innerhalb der Senkbohrung angeordnet ist. Hierbei ergibt sich der Vorteil, dass der mittels der beiden ineinandergreifenden Wirkeingriffsabschnitte erstellte Antriebsmechanismus zum Übertragen der Schwenkbewegung von einem Greifarm auf den anderen Greifarm derselben Greifeinrichtung vor Schmutz und anderen Fremdkörper als auch vor äußeren Einwirkungen besser geschützt wird. Des Weiteren wird dadurch der Aufbau der Transportvorrichtung kompakter und kleiner.

Um die Lagerung und Befestigung einer Greifeinrichtung auf der Trägerplatte zu verbessern, weist vorzugsweise jede Greifeinrichtung ein Aufsatzelement (Lagerdeckel) zum rotierbaren Lagern der Schwenkwellen auf, wobei das Aufsatzelement mit der Trägerplatte fest verbunden ist. Dadurch werden Hebelkräfte auf die Schwenkwellen und deren Lagerung beim Greifen und Halten von Behältern besser kompensiert, ein Materialverschleiß vorgebeugt und die Betriebszeit der Transportvorrichtung verlängert (Stichwort wartungsarm).

Die nachfolgende Beschreibung bezieht sich auf die beiliegenden Zeichnungen, die bevorzugte Ausführungsbeispiele aufzeigen, und erläutert weitere Merkmale und Vorteile der Erfindung. Es wird betont, dass die Figuren teilweise identisch oder ähnlich sind und die Figurenbeschreibung gegebenenfalls nur auf die Unterschiede zwischen den Zeichnungen abstellt.

Es zeigen:
- Fig. 1: eine perspektivische Ansicht auf einen Teil einer ersten erfindungsgemäßen Transportvorrichtung mit mehreren Greifeinrichtungen mit jeweils zwei Greifarmen;
- Fig. 2: eine weitere perspektivische Ansicht auf die Transportvorrichtung aus Fig. 1;
- Fig. 3: eine perspektivische Ansicht auf eine zweite erfindungsgemäße Transportvorrichtung mit Greifarmen;
- Fig. 4: eine weitere perspektivische Ansicht (von unten) auf die Transportvorrichtung aus Fig. 3;
- Fig. 5a: eine schematische Seitenansicht (von unten) auf einen Teil einer erfindungsgemäßen Transportvorrichtung aus Fig. 1, in der die Greifeinrichtung mit zwei Greifarmen dargestellt wird;
- Fig. 5b: einen Querschnitt durch die Seitenansicht von Fig. 5a;
- Fig. 6: eine schematische Teilansicht (von unten) auf die Transportvorrichtung aus Fig. 1;
- Fig. 7: eine perspektivische Ansicht auf eine dritte erfindungsgemäße Transportvorrichtung mit mehreren Greifeinrichtung mit jeweils zwei Greifarmen;
- Fig. 8: eine weitere perspektivische Ansicht auf die Transportvorrichtung aus Fig. 7;
- Fig. 9: eine weitere perspektivische Ansicht (von unten) auf die Transportvorrichtung aus Fig. 7;
- Fig. 10a: eine schematische Seitenansicht (von unten) auf einen Teil einer erfindungsgemäßen Transportvorrichtung aus Fig. 7, in der die Greifeinrichtung mit zwei Greifarmen dargestellt wird;
- Fig. 10b: einen Querschnitt durch die Seitenansicht von Fig. 10a;
- Fig. 11: eine perspektivische Ansicht auf eine vierte erfindungsgemäße Transportvorrichtung mit mehreren Greifeinrichtungen mit jeweils zwei Greifarmen;
- Fig. 12: eine weitere perspektivische Ansicht auf die Transportvorrichtung aus Fig. 11;
- Fig. 13a: vier schematische Darstellungen (u.a. Seiten- und Frontansicht) einer Greifeinrichtung von der erfindungsgemäßen Transportvorrichtung aus Fig. 11;
- Fig. 13b: eine perspektivische Ansicht auf die Greifeinrichtung aus Fig. 13a; und
- Fig. 13c: eine weitere perspektivische Ansicht auf die Greifeinrichtung aus Fig. 13a.

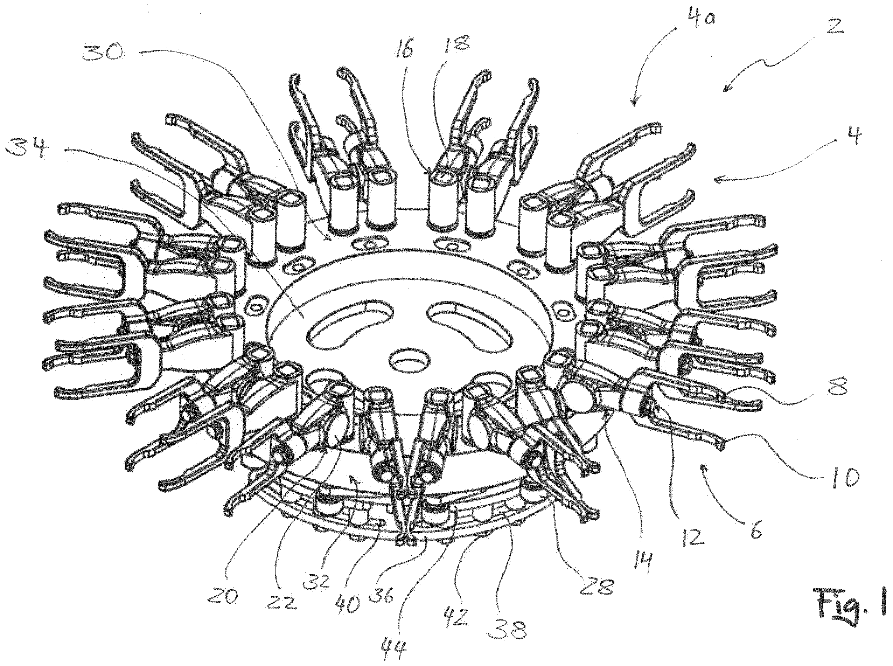

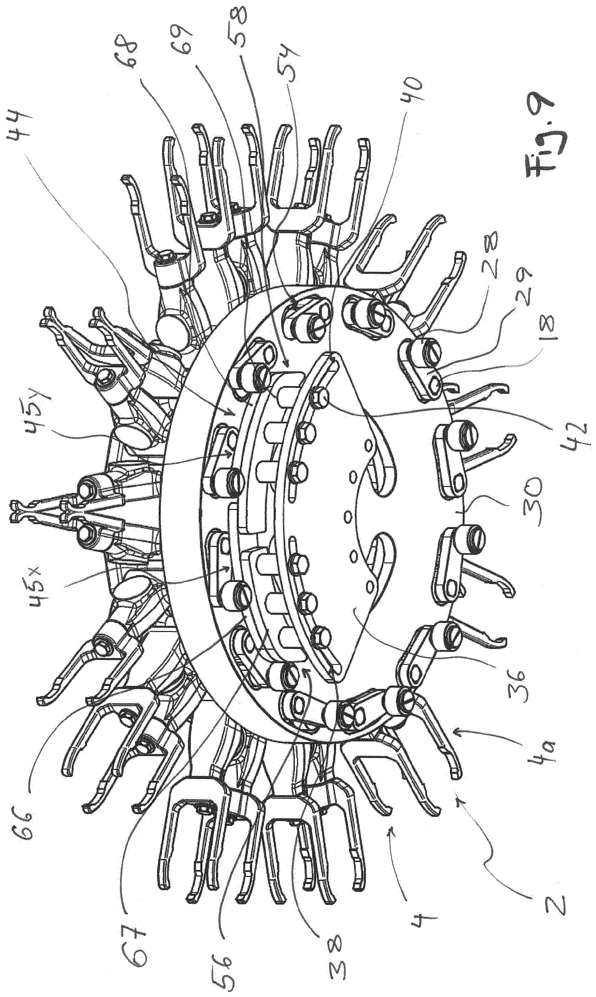

Fig. 1 zeigt eine perspektivische Ansicht auf einen Teil einer ersten Transportvorrichtung mit mehreren Greifeinrichtungen 2 mit jeweils zwei Greifarmen 4, 4a. Die Greifeinrichtungen 2 sind alle gleich ausgebildet. Des Weiteren sind die Greifeinrichtungen 2 auf einer kreisrunden Trägerplatte 30, insbesondere auf dessen Trägerring 32, konzentrisch um dessen Mittelpunkt und im gleichen Abstand zueinander angeordnet und befestigt. Der Mittelpunkt liegt auf der gleichen Linie wie eine Antriebswelle (nicht dargestellt) der Transportvorrichtung, wobei die Antriebswelle mit dem Befestigungselement 34 der Trägerplatte 30 verdrehsicher verbunden wird. Die Höhe des Trägerrings 32 ist größer als die Höhe des Befestigungselements 34, da die Greifeinrichtungen 2 eine stabilere Befestigungsfläche brauchen. Die Greifeinrichtungen 2 sind radial zum Mittelpunkt ausgerichtet. Jede Greifeinrichtung 2 weist jeweils ein Greifarmpaar aus zwei Greifarmen 4, 4a, wobei ein Greifarm 4 gegengleich zum anderen Greifarm 4a ausgebildet ist. Der Greifarm 4 weist einen Greifarmkörper 14 und einen Greifabschnitt 6 mit einem ersten und einem zweiten Greiffinger 8, 10 auf. Der Greifarmkörper 14 ist mittels einer in einer Bohrung 16 angeordneten und verdrehsicher verbundenen Schwenkwelle 18 (Lagerelement) mit dem Trägerring 32 drehbar gelagert und verbunden. Der Greifarmkörper 14 ragt teilweise über den äußeren Rand des Trägerrings 32 hinaus. Der Greifabschnitt 6 ist gegenüber der Trägerplatte 30 nach außen gerichtet, damit eine Greifeinrichtung einen Behälter greifen und halten kann. Neben der Bohrung 16 weist der Greifarmkörper 14 eine Aufnahme 20 und einen darin befestigten Magneten 22 auf. In diesem Fall sind die Magneten 22 einer Greifeinrichtung entgegengesetzt gepolt und ziehen sich an. Somit sind z.B. der Nordpol des Magneten des ersten Greifarms auf den zweiten (gegengleich ausgebildeten) Greifarm derselben Greifeinrichtung und der Südpol des Magneten des zweiten Greifarms auf den ersten Greifarm ausgerichtet. Des Weiteren ist der Greifarmkörper 14 mit dem Greifabschnitt 6 mittels einer Schwenkachse 12 verbunden, um dem Greifabschnitt 6 eine Schwenkbewegung senkrecht zur Bohrung 16 zu erlauben und schrägliegende Behälter besser zu greifen. Die beiden Schwenkwellen 18 einer Greifeinrichtung 2 sind mittels Wirkeingriffsabschnitten (nicht dargestellt), insbesondere Verzahnungen, miteinander im Eingriff, um die Schwenkbewegung eines Greifarms synchron und gleichmäßig auf den anderen Greifarm zu übertragen. Eine der Schwenkwellen 18 einer Greifeinrichtung 2 ist über einen Betätigungshebel (nicht dargestellt) mit einem Betätigungselement 28 verbunden. Sobald das Betätigungselement 28 mit der Ansteuerungsvorrichtung 44 in Eingriff kommt und um einen Weg bzw. Winkel ausgelenkt wird, wird eine Drehung auf die Schwenkwelle 18 und somit auf den Greifarm 4 übertragen. Mittels des Wirkeingriffsabschnitts wird diese Drehung auf den zweiten Greifarm derselben Greifeinrichtung 2 übertragen. Die Ansteuerungsvorrichtung 44 ist Kreissegment-förmig ausgebildet und führt das Betätigungselement 28 an seiner Außenseite bzw. Kreisbogen entlang, wobei es dieses auslenkt und eine Drehung der Schwenkwelle 18 und somit des Greifarms 4 bewirkt. Bei dieser Ansteuerung wird die Greifeinrichtung geöffnet. Weitere Details über die Ansteuerungsvorrichtung 44 sind insbesondere in Fig. 9 und der nachfolgenden Beschreibung offenbart. Die Ansteuerungsvorrichtung 44 ist mittels Befestigungsschrauben 42 auf einem Befestigungsrahmen 36 befestigt und von diesem beabstandet angeordnet. In dem Befestigungsrahmen 36 sind eine erste und eine zweite radial geformte Ausnehmung 38, 40 an dessen Außenrand ausgebildet, um den Befestigungsschrauben 42 als Führung dienen zu können. Dadurch kann die Ansteuerungsvorrichtung 44 vor seiner endgültigen Befestigung auf dem Befestigungsrahmen 36 verschoben und die Ansteuerungspositionen/winkel der Greifeinrichtungen 2 festgelegt werden.

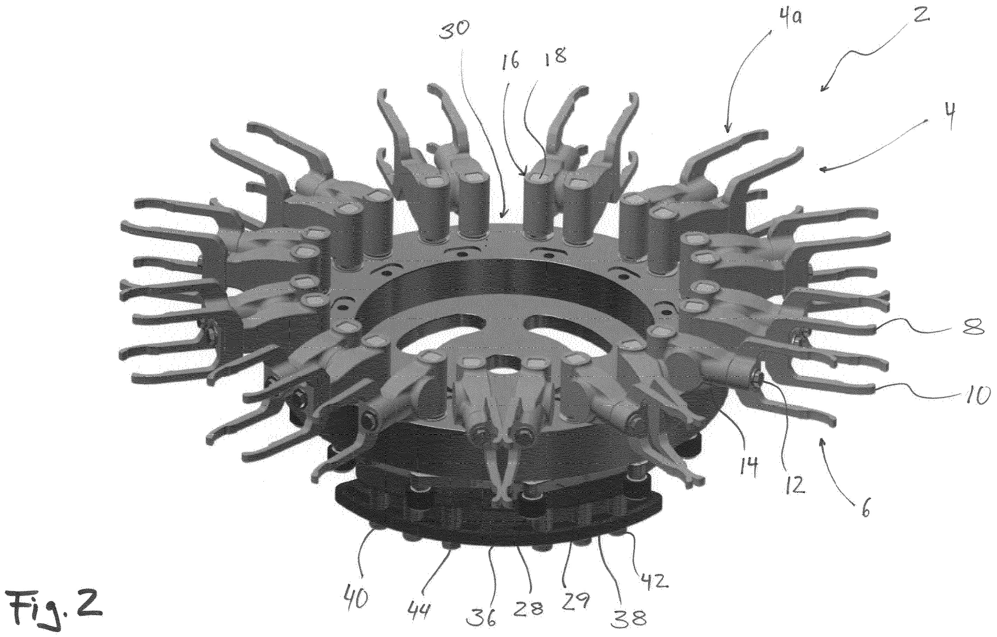

Fig. 2 zeigt eine weitere perspektivische Ansicht auf die Transportvorrichtung aus Fig. 1. Neben den zuvor genannten Merkmalen sind zusätzlich der Betätigungshebel 29, die Ansteuerungsvorrichtung 44 und der Befestigungsrahmen 36 besser erkennbar. Hierbei ist der Betätigungshebel 29 von einer Schwenkwelle 18 ausgehend im Uhrzeigersinn ausgerichtet.

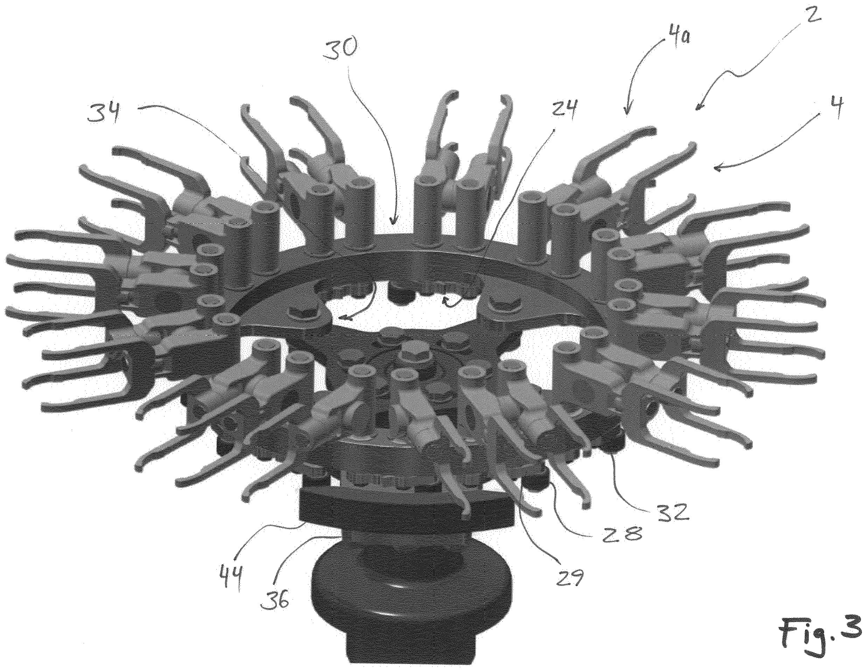

Fig. 3 zeigt eine perspektivische Ansicht auf eine zweite Transportvorrichtung mit Greifeinrichtungen 2 mit jeweils zwei Greifarmen 4, 4a. Im Vergleich zu Fig. 1 ist der Betätigungshebel 29 von einer Schwenkwelle 18 ausgehend gegen den Uhrzeigersinn ausgerichtet. Des Weiteren ist die Anordnung der Ansteuerungsvorrichtung 44 bzw. zumindest die Führung des Betätigungselements 28 unterschiedlich, da in Fig. 3 das Betätigungselement 28 an der Innenseite bzw. der Kreissehne der Ansteuerungsvorrichtung 44 geführt wird. Auf Grund der unterschiedlichen Ausrichtung des Betätigungshebels 29 muss das Betätigungselement 28 im Vergleich zu Fig. 1 in die entgegengesetzte Richtung ausgelenkt werden, um die Greifeinrichtung 2 zu öffnen. Außerdem ist der Wirkeingriffsabschnitt 24 der Schwenkwellen 18 sichtbar und kann auf einer Ebene mit dem Betätigungshebel 29, insbesondere unterhalb des Trägerrings 32, angeordnet werden. Der Betätigungshebel 29 in Fig. 1 erstreckt sich über die Achsen der Schwenkwellen 18, weshalb die Wirkeingriffsabschnitte 24 oberhalb des Betätigungshebels, insbesondere in einer Senkbohrung in dem Trägerring 32, angeordnet sind. Ein weiterer Unterschied liegt in dem Befestigungselement 34, das in diesem Fall, statt als Scheibe, als vier zum Mittelpunkt bzw. der Antriebsachse gerichtete Fortsätze ausgebildet ist. Diese Fortsätze sind mit einer am Ende der Antriebswelle befestigten Aufnahmestruktur fest verbunden.

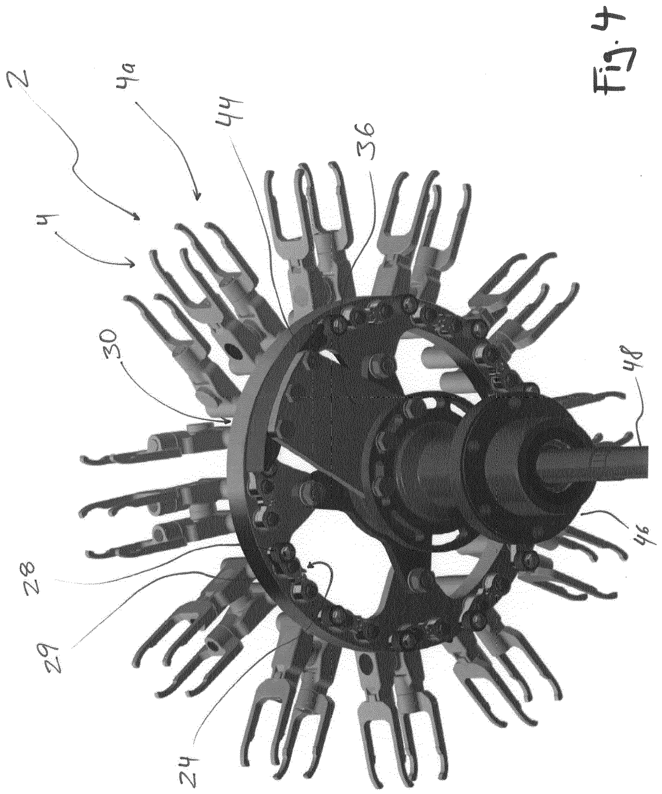

Fig. 4 zeigt eine perspektivische Ansicht von unten auf die Transportvorrichtung aus Fig. 3. Die Antriebswelle 48 der Transportvorrichtung und deren achsensymmetrische Außenverkleidung 46 sind aus diesem Blickwinkel erkennbar. Die Außenverkleidung 46 ist derart ausgebildet, die Antriebswelle 48 drehbar zu lagern und somit nicht mitzurotieren. Des Weiteren ist der Befestigungsrahmen 36 an der Außenverkleidung 46 befestigt, um die Position der Ansteuerungsvorrichtung 44 beizubehalten.

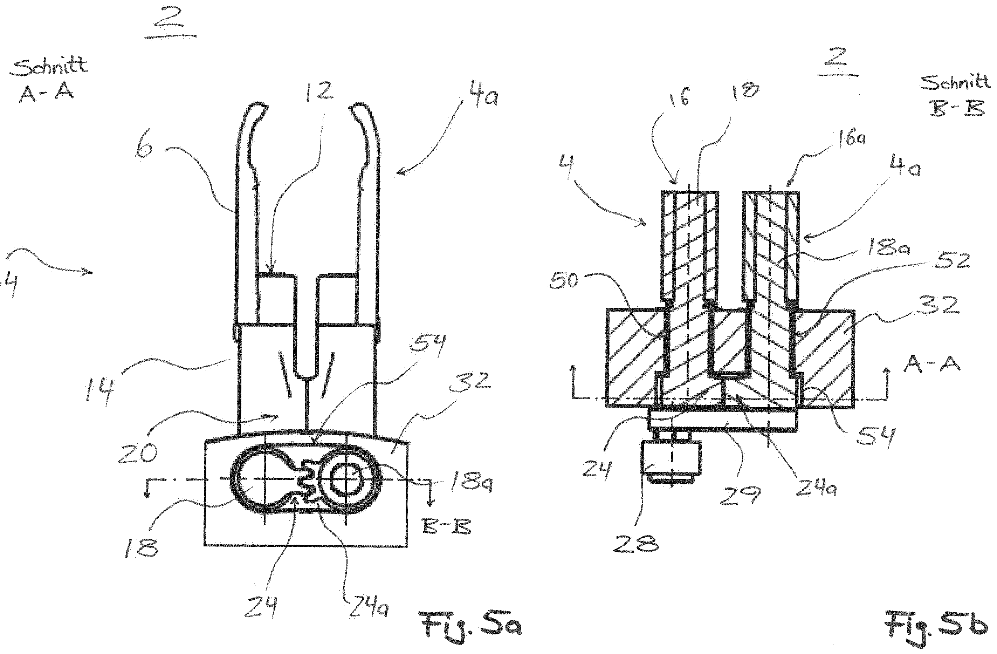

Fig. 5a zeigt eine schematische Seitenansicht (von unten) auf einen Teil einer erfindungsgemäßen Transportvorrichtung aus Fig. 1, in der die Greifeinrichtung 2 mit zwei Greifarmen 4, 4a dargestellt wird. Die Wirkeingriffsabschnitte 24, 24a der beiden Schwenkwellen 18, 18a sind innerhalb einer an der Unterseite des Trägerrings 32 ausgebildeten Senkbohrung 54 bzw. Sackloch oder Vertiefung angeordnet. Die Senkbohrung 54 ist derart ausgebildet, dass die Wirkeingriffsabschnitte 24, 24a beim Schwenken der Schwenkwellen 18, 18a nicht an den Innenrand der Senkbohrung 54 stoßen. Die Greifeinrichtung 2 ist derart ausgebildet, dass die Greifarme 4, 4a in der Greifstellung, ohne dabei einen Behälter zu halten, und insbesondere die Magnete in den Aufnahmen 20, parallel zueinander angeordnet sind. Ein geradliniger Schnitt B-B verläuft durch die Achsenmittelpunkte der Schwenkwellen 18, 18a und weist auf die nachfolgende Querschnittsansicht von Fig. 5b hin.

Fig. 5b zeigt einen Querschnitt durch die Seitenansicht von Fig. 5a, wobei ein geradliniger Schnitt A-A an der Unterseite des Trägerrings 32 verläuft und die Sichtweise auf Fig. 5a zeigt. Die beiden Schwenkwellen 18, 18a der Greifeinrichtung 2 sind parallel zueinander angeordnet und sind in einer ersten und in einer zweiten Bohrung 50, 52 des Trägerrings 32 drehbar gelagert. Die Tiefe der Senkbohrung 54 ist derart ausgestaltet, dass die Wirkeingriffsabschnitte 24, 24a im Wesentlichen in der Bohrung 54 angeordnet sind. Der Betätigungshebel 29 verläuft parallel zur Unterseite des Trägerrings 32, ist aber soweit beabstandet, dass der Hebel 29 in seiner Schwenkbewegung nicht behindert wird.

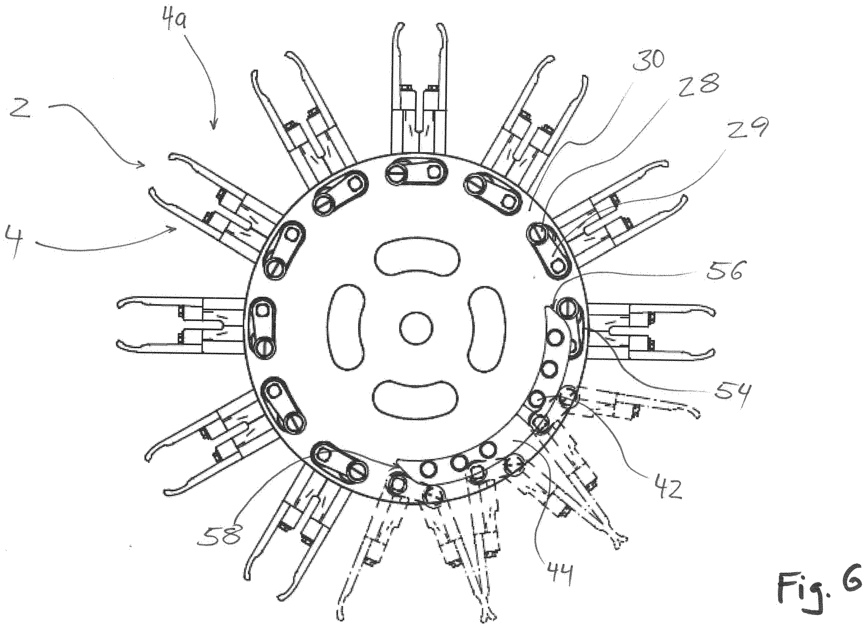

Fig. 6 zeigt einen Ausschnitt einer schematischen Unteransicht der Transportvorrichtung aus Fig. 1. Hierbei sind die Senkbohrungen 54 für jede Greifeinrichtung 2 erkennbar. Ebenso wird die Ansteuerungsvorrichtung 44 mit einer am Anfang angeordneten ersten Ansteuerungsflanke 56 und einer am Ende angeordneten zweiten Ansteuerungsflanke 58 gezeigt. Diese Flanken 56, 58 helfen, das Betätigungselement 28 stetig auszulenken, zu einem Bereich mit einer gleichmäßigen, maximalen Auslenkung zu führen und anschließend freizugeben. Der zuvor genannte Bereich wird durch einen Rand der Ansteuerungsvorrichtung 44 charakterisiert, der an jedem Punkt den gleichen Abstand zu der Antriebswelle (nicht dargestellt), insbesondere dessen Mittelpunkt, hat.

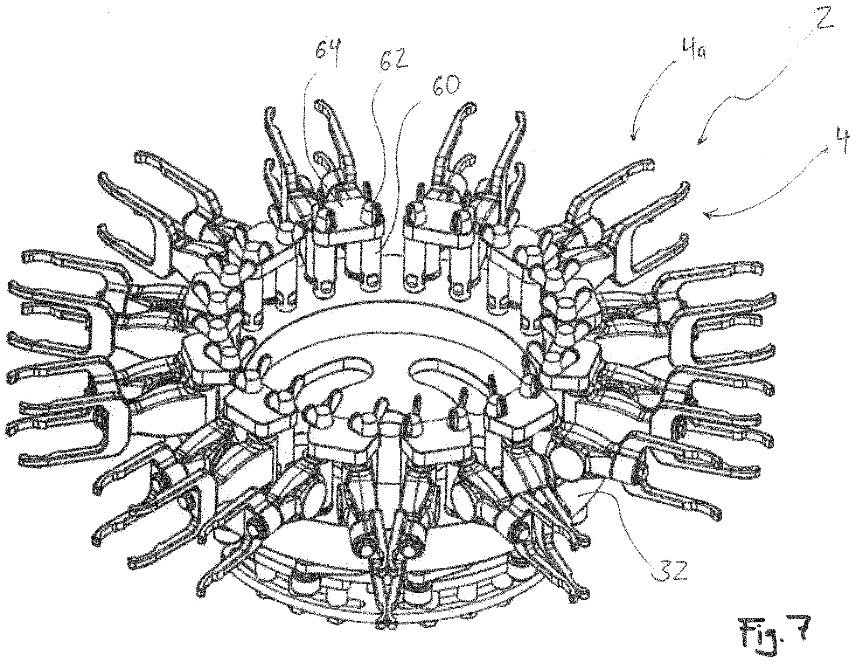

Fig. 7 zeigt eine perspektivische Ansicht auf eine dritte Transportvorrichtung mit mehreren Greifeinrichtungen 2 mit jeweils zwei Greifarmen 4, 4a, wobei diese Transportvorrichtung eine Weiterentwicklung der Vorrichtung aus Fig. 1 darstellt. In der dritten Transportvorrichtung erstrecken sich die Schwenkwellen (nicht erkennbar) an deren oberen Seiten über die Bohrung der Greifarme hinaus und sind in einem Lagerelement/-deckel 64 der Greifeinrichtung 2 drehbar gelagert bzw. angeordnet. Das Lagerelement 64 ist vorzugsweise eine Metallplatte mit zwei Senkbohrungen als Lager für die Schwenkwellen und zwei zusätzlichen Befestigungsbohrungen. Das Lagerelement 64 wird mittels zweier Abstandselemente 60 auf einen bestimmten Abstand zum Trägerring 32 angeordnet und an diesem mit Hilfe von zwei Flügelschrauben 62 befestigt.

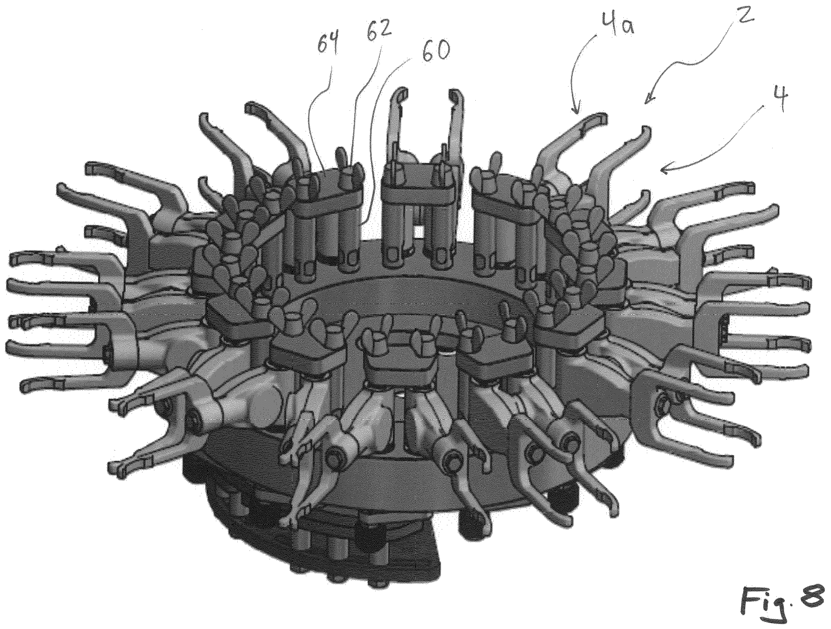

Fig. 8 zeigt eine weitere perspektivische Ansicht auf die Transportvorrichtung aus Fig. 7. Durch die farbliche Darstellung sind die verschiedenen Bauteile besser erkennbar.

Fig. 9 zeigt eine weitere perspektivische Ansicht (von unten) der Transportvorrichtung aus Fig. 7. Die Ansteuerungsvorrichtung 44 besteht aus einer ersten Kurvenkomponente 45x und einer zweiten Kurvenkomponente 45y, die jeweils ein oberes Kurventeil 66, 68 und ein unteres Kurventeil 67, 69 sowie die erste oder die zweite Ansteuerungsflanke 56, 58 aufweisen. Die Kurventeile einer Kurvenkomponente bilden eine mit dem Betätigungselement 28 in Eingriff kommende Oberfläche und sind hierbei derart ausgebildet und/oder zueinander angeordnet, dass die Oberfläche eben, stetig und ungefähr genauso breit wie das Betätigungselement 28 hoch ist. Hierbei wird das Betätigungselement 28 über die gesamte Oberfläche (abgesehen von den Ansteuerungsflanken 56, 58) um den gleichen Weg ausgelenkt, um die Greifeinrichtung 2 zu öffnen. Dabei wird diese Oberfläche zur Hälfte von dem oberen Kurventeil 66, 68 und zur anderen Hälfte von dem unteren Kurventeil 67, 69 gebildet, so dass ein Kurventeil 66, 67, 68, 69 allein das Betätigungselement 28 ansteuern und führen könnte. Die vier Kurventeile 66, 67, 68, 69 sind in der Fig. 9 alle gleich hoch dimensioniert. Jede Kurvenkomponente 45x, 45y ist jeweils mittels dreier Befestigungsschrauben 42 an dem Befestigungsrahmen 36 befestigt und von diesem beabstandet. Hierbei werden die Befestigungsschrauben 42 der ersten Kurvenkomponente 45x in der ersten kreisbogenförmigen Ausnehmung 38 des Befestigungsrahmen 36 und die der zweiten Kurvenkomponente 45y in der zweiten kreisbogenförmigen Ausnehmung 40 geführt, aufgenommen und befestigt. Die kreisbogenförmigen Ausnehmungen 38, 40 haben die gleiche Krümmung (bzw. den gleichen Radius) wie die mit dem Betätigungselement 28 in Eingriff kommende Oberfläche der Kurvenkomponenten 45x, 45y. Die Kurvenkomponenten 45x und 45y selbst sind derart ausgebildet und zueinander verschiebbar, um miteinander in Eingriff zu kommen und die zuvor genannte Wirkoberfläche stetig verlängern oder verkürzen zu können. Beim Ineinandergreifen der beiden Kurvenkomponenten 45x, 45y überschneidet sich das obere Kurventeil 66 mit dem unteren Kurventeil 69 derart, dass die Oberfläche fortgesetzt wird und das Betätigungselement 28 stetig und eben darüber geführt werden kann. Der Abstand bzw. der Spalt zwischen den beiden oberen Kurventeilen 66, 68 sowie zwischen den beiden unteren Kurventeilen 67, 69 hat somit keine Auswirkung auf die Auslenkung des Betätigungselements 28, insbesondere auf Grund der gleichen Höhe des Elements 28 zur Höhe der Ansteuerungsvorrichtung 44. Bei diesen Spalten wird das Betätigungselement 28 nur vom oberen Kurventeil 66 oder vom unteren Kurventeil 69 ausgelenkt bzw. geführt. An diesem Punkt wird darauf hingewiesen, dass die Ansteuerungsvorrichtung 44 aus einer oder mehreren ineinander verschiebbaren Kurvenkomponenten gebildet werden kann, die jeweils einstückig ausgebildet sind oder mehrere aufeinander angeordnete Kurventeile aufweisen. Ebenso wird betont, dass die Ansteuerungsvorrichtung aus Fig. 3 und 4 die gleichen Merkmale wie die Ansteuerungsvorrichtung aus Fig. 9 auf weisen kann, um die Wirkoberfläche in Fig. 3 und 4 (nicht an der Außen- sondern an der Innenseite) entsprechend auszubilden und anzupassen.

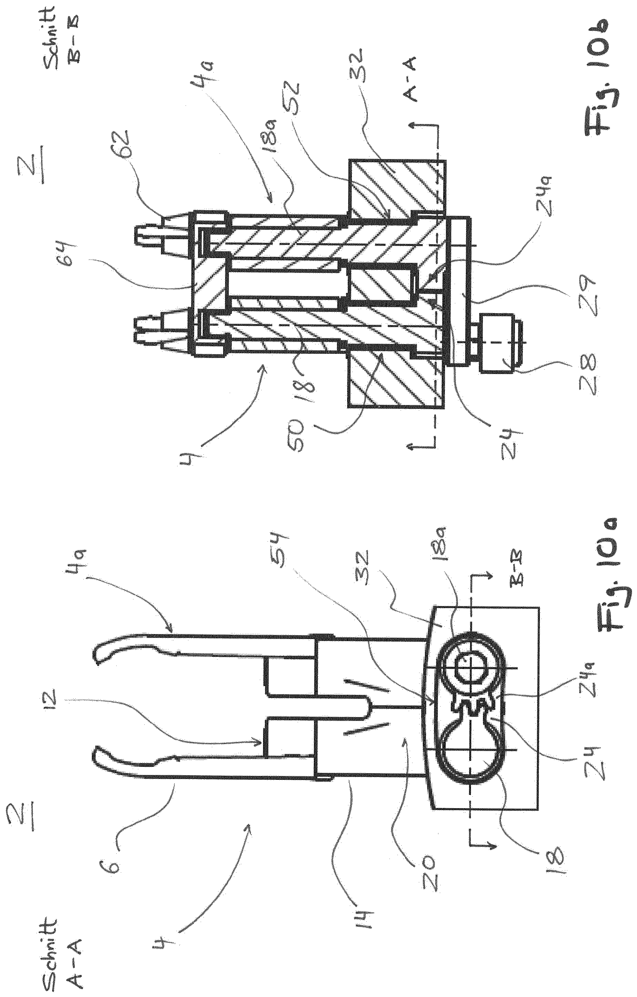

Fig. 10a zeigt eine schematische Seitenansicht (von unten) auf einen Teil einer erfindungsgemäßen Transportvorrichtung aus Fig. 7, in der die Greifeinrichtung mit zwei Greifarmen dargestellt wird. Diese Seitenansicht ist im Wesentlichen identisch zu der Fig. 5a, verdeutlich aber zusätzlich den Schnittverlauf B-B für die nachfolgende Fig. 10b.

Fig. 10b zeigt einen Querschnitt durch die Seitenansicht von Fig. 10a, die im Wesentlichen identisch zu der Fig. 5b ist. Allerdings sind zusätzlich das Lagerelement 64 und die beiden Flügelschrauben 62 erkennbar. Ebenso ist die besondere Ausgestaltung der Schwenkwellen 18, 18a an deren Oberseite ersichtlich: hierbei ist der Radius der Schwenkwellen kleiner als der Rest der Schwenkwellen. Dieser obere Teil ist in entsprechenden Senkbohrungen des Lagerelements 64 drehbar angeordnet.

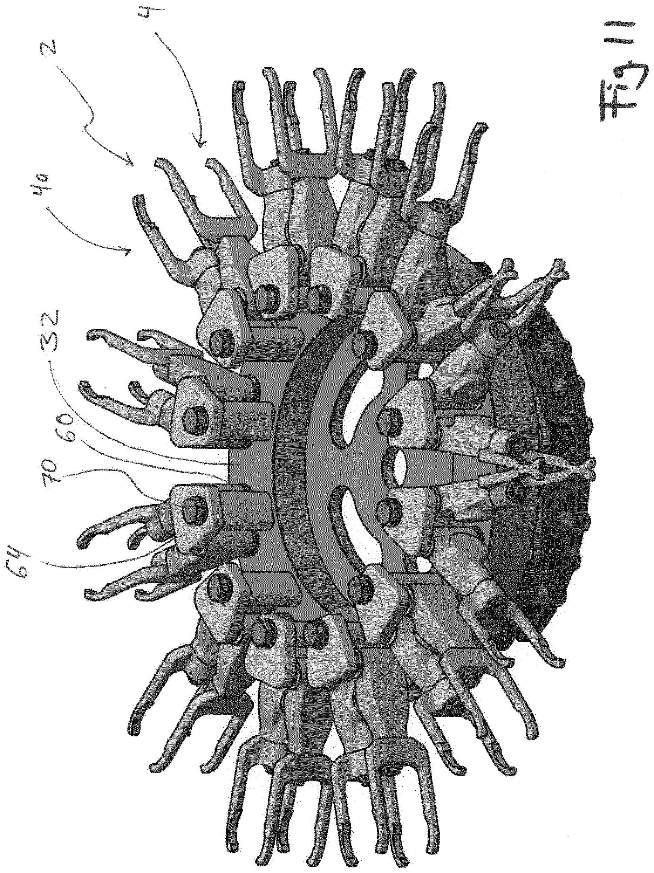

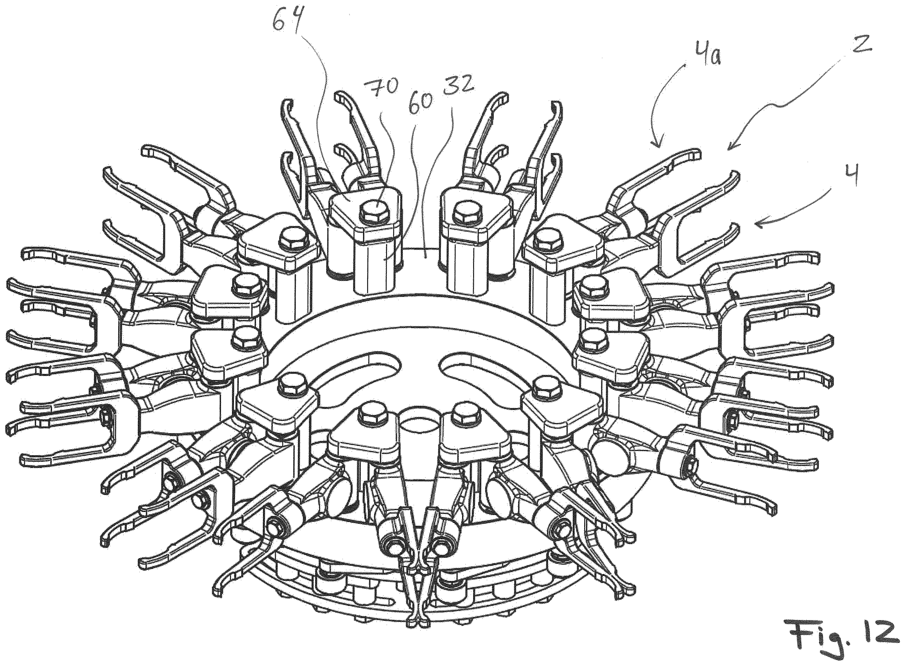

Fig. 11 und 12 zeigen eine perspektivische Ansicht auf eine vierte Transportvorrichtung mit mehreren Greifeinrichtungen mit jeweils zwei Greifarmen. Im Gegensatz den Greifeinrichtungen aus Fig. 7 und 8 sind die Lagerelemente 64 der Greifeinrichtungen 2 jeweils nur mit einer Sechskantschraube 70 und einem Abstandselement 60 an dem Trägerring 32 beabstandet befestigt. Dieses Ausführungsbeispiel bedarf zu der Greifeinrichtung aus Fig. 7 weniger Bauteile und ist somit günstiger, einfacher herstellbar sowie installierbar und wartungsfreundlicher. Vorteilhafterweise können das Lagerelement 64 und das bzw. die Abstandselement/e 60 (bzgl. mehrerer Abstandselemente siehe u.a. Fig. 7) einstückig ausgebildet oder stoffschlüssig oder per Presspassung miteinander verbunden sein. Die Schließmittel (nicht sichtbar) sind in den Greifarmkörpern der Greifarme 4, 4a angeordnet und abgedeckt.

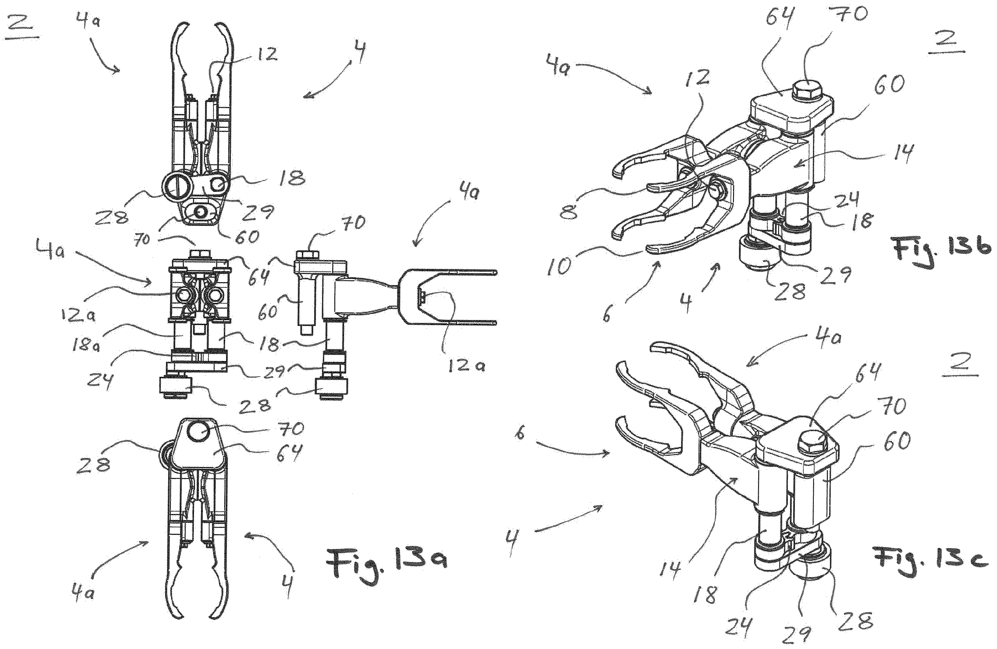

Fig. 13a zeigt vier schematische Darstellungen (u.a. Seiten- und Frontansicht) einer Greifeinrichtung 2 von der Transportvorrichtung aus Fig. 11. Die mittlere linke Darstellung zeigt insbesondere die parallele Anordnung der Schwenkwellen 18, 18a zueinander, die senkrechte Ausrichtung der Wirkeingriffsabschnitte 24 und des Betätigungshebels 29 zu den Wellen 18, 18a, sowie die parallele Anordnung der Wirkeingriffsabschnitte 24 zu dem Hebel 29.

Fig. 13b und 13c zeigen perspektivische Ansichten auf die Greifeinrichtung 2 aus Fig. 13a.

### Bezugszeichen

- 2: Greifeinrichtung
- 4: Greifarm
- 6: Greifabschnitt
- 8: Erster Greiffinger
- 10: Zweiter Greiffinger
- 12: Schwenkachse
- 14: Greifarmkörper
- 16: Bohrung
- 18: Schwenkwelle (Lagerelement)
- 20: Aufnahme (Sackloch)
- 22: Schließmittel (Magnet)
- 24: Wirkeingriffsabschnitt (Verzahnungsabschnitt)
- 26: Zahn des Verzahnungsabschnitts
- 28: Betätigungselement
- 29: Betätigungshebel
- 30: Trägerplatte
- 32: Trägerring der Trägerplatte
- 34: Befestigungselement der Trägerplatte
- 36: Befestigungsrahmen
- 38: Erste Ausnehmung
- 40: Zweite Ausnehmung
- 42: Befestigungsschraube
- 44: Ansteuerungsvorrichtung (Kurveneinrichtung bzw. -steuerung)
- 45x: Erste Kurvenkomponente
- 45y: Zweite Kurvenkomponente
- 46: Außenverkleidung
- 48: Antriebswelle
- 50: Erste Bohrung für die Schwenkwelle des 1. Greifarms
- 52: Zweite Bohrung für die Schwenkwelle des 2. Greifarms
- 54: Vertiefung für Wirkeingriffsabschnitte (Senkbohrung)
- 56: Erste Ansteuerungsflanke
- 58: Zweite Ansteuerungsflanke
- 60: Abstandselement
- 62: Flügelschraube
- 64: Lagerelement/-deckel
- 66: Oberes Kurventeil (der ersten Kurvenkomponente 45x)
- 67: Unteres Kurventeil (der ersten Kurvenkomponente 45x)
- 68: Oberes Kurventeil (der zweiten Kurvenkomponente 45y)
- 69: Unteres Kurventeil (der zweiten Kurvenkomponente 45y)
- 70: Sechskantschraube
- #a: Alle Bezugszeichen mit einem "a" beziehen sich auf den zum ersten Greifarm gegengleich ausgebildeten zweiten Greifarm

## Patentansprüche

1. Transportvorrichtung zum Transportieren von Behältern mit mehreren Greifeinrichtungen (2), mit einer Trägerplatte (30) zum Aufnehmen der Greifeinrichtungen (2), mit einer Antriebswelle (48) zum Drehen der Trägerplatte (30) und mit einer Ansteuerungsvorrichtung (44),
wobei
die mehreren Greifeinrichtungen (2) zum Greifen, Halten und Führen von insbesondere flaschenartigen Behältern, mit
- jeweils wenigstens einem Greifarmpaar aus einem ersten Greifarm (4) sowie einem gegengleich ausgebildeten, zweiten Greifarm (4a) ausgebildet sind,
wobei
der erste und zweite Greifarm (4) der Greifarmpaare jeweils mit einer Bohrung (16) zur Aufnahme eines Lagerelements (18) zum schwenkbaren Befestigen des Greifarms (4) in der Greifeinrichtung (2) und jeweils mit einer Aufnahme (20) für ein Schließmittel (22) zum Bewegen des Greifarms (4) von einer Öffnungsstellung in eine Greifstellung verfügen,
wobei
die Bohrung (16) derart ausgebildet ist, ein als Schwenkwelle fungierendes Lagerelement (18) aufzunehmen und mit dem Lagerelement (18) verdrehsicher zu verbinden, um eine Schwenkbewegung des Lagerelements (18) auf den Greifarm (4) zum Bewegen des Greifarms (4) von der Greifstellung in die Öffnungsstellung zu übertragen;
wobei
der erste und zweite Greifarm (4) wenigstens einen Wirkeingriffsabschnitt, insbesondere einen Verzahnungsabschnitt (24) mit zumindest segmentweise koaxial um die Bohrung (16) an der Greifarminnenseite angeordneten Zähnen (26), zum synchronen Schwenken des Greifarms (4) mit dem gegengleich ausgebildeten Greifarm (4a) der jeweiligen Greifeinrichtung (2) aufweist;
die Greifeinrichtungen des Weiteren jeweils mit
- zwei Schwenkwellen (18, 18a) für das jeweilige Greifarmpaar,
- einem an einer der Schwenkwellen (18, 18a) ausgebildeten Betätigungselement (28) zum Ansteuern dieser Schwenkwelle, und mit
- einem Schließmittel (22) zum Bewegen des Greifarmpaars von der Öffnungsstellung in die Greifstellung ausgebildet sind,
wobei
ein Teil oder ein erster Abschnitt des Schließmittels (22) in dem jeweiligen ersten Greifarm (4) und ein anderes Teil bzw. ein zweiter Abschnitt des Schließmittels in dem ihm zugeordneten zweiten Greifarm (4a) angeordnet sind;
wobei
die Ansteuerungsvorrichtung (44) in einer Position fixiert ist und derart ausgebildet ist, jedes Betätigungselement (28) zwischen einer ersten und einer zweiten Position/Winkelstellung der entsprechenden Greifeinrichtung (2) anzusteuern, so dass die jeweilige Greifeinrichtung in die Öffnungsstellung versetzt, über einen bestimmten Winkel in der Öffnungsstellung gehalten und anschließend in die Greifstellung überführt wird;
**dadurch gekennzeichnet, dass**
die Ansteuerungsvorrichtung (44) als Kurveneinrichtung aus mehreren ineinander verschiebbaren Kurvenkomponenten ausgebildet ist, die jeweils einstückig ausgebildet sind oder mehrere aufeinander angeordnete Kurventeile aufweisen.

2. Transportvorrichtung nach Anspruch 1,
wobei die Trägerplatte (30) für jede Greifeinrichtung zwei Lagerbohrungen (50, 52) zum Lagern der Schwenkwellen aufweist, und wobei der Wirkeingriffsabschnitt der Schwenkwellen unterhalb der Trägerplatte angeordnet ist.

3. Transportvorrichtung nach Anspruch 1,
wobei die Trägerplatte (30) für jede Greifeinrichtung zwei Lagerbohrungen (50, 52) zum Lagern der Schwenkwellen sowie eine die beiden Lagerbohrungen verbindende Senkbohrung (54) aufweist, und wobei der Wirkeingriffsabschnitt der Schwenkwellen innerhalb der Senkbohrung angeordnet ist.

4. Transportvorrichtung nach einem der Ansprüche 1 bis 3,
wobei jede Greifeinrichtung (2) ein Aufsatzelement (64) zum rotierbaren Lagern der Schwenkwellen aufweist, wobei das Aufsatzelement mit der Trägerplatte (30) fest verbunden ist.

5. Transportvorrichtung nach einem der vorherigen Ansprüche,
**dadurch gekennzeichnet, dass**
der jeweilige Greifarm (4) einen Greifabschnitt (6) aufweist, wobei der Greifabschnitt (6) um eine senkrecht zur Bohrung (16) verlaufende Schwenkachse (12) schwenkbar gelagert ist.

6. Transportvorrichtung nach einem der vorherigen Ansprüche,
**dadurch gekennzeichnet, dass**
die Aufnahme (20) als zwischen dem jeweiligen Greifabschnitt (6) und der Bohrung (16), insbesondere in einem Greifarmkörper (14) des Greifarms (4), angeordnetes Sackloch ausgebildet ist.

7. Transportvorrichtung nach einem der vorherigen Ansprüche,
**dadurch gekennzeichnet, dass**
das Schließmittel (22) als ein Magnet eines sich anziehenden oder abstoßenden Magnetpaares ausgebildet ist.

8. Transportvorrichtung nach einem der vorherigen Ansprüche,
**gekennzeichnet durch**
eine Schwenkwelle (18), die mit dem jeweiligen Greifarm (4) einstückig ausgebildet ist.

## Claims

1. A transporting device for transporting containers having multiple gripping apparatuses (2), having a support plate (30) for receiving the gripping apparatuses (2), having a drive shaft (48) for rotating the support plate (30) and having an actuating device (44),
wherein
the multiple gripping apparatuses (2) for gripping, holding and guiding containers, in particular bottle-like containers, having
- in each case, at least one pair of gripping arms configured from a first gripping arm (4) as well as a second gripping arm (4a) of mirror-inverted configuration,
wherein
the first and second gripping arm (4) of the pairs of gripping arms in each case are furnished with a bore (16) for receiving a bearing element (18) for pivotably fixing the gripping arm (4) in the gripping apparatus (2) and, in each case, with a receptacle (20) for a closing means (22) for moving the gripping arm (4) from an open position into a gripping position,
wherein
the bore (16) is configured so as to receive a bearing element (18) functioning as a pivot shaft and to connect to the bearing element (18) in a rotationally fixed manner in order to transfer a pivoting movement of the bearing element (18) to the gripping arm (4) for moving the gripping arm (4) from the gripping position into the open position;
wherein
the first and second gripping arm (4) have at least one effective engagement section, in particular a toothed section (24) with teeth (26) arranged coaxially at least in segments around the bore (16) on the gripping arm inner side, for the synchronous pivoting of the gripping arm (4) with the gripping arm (4a) of mirror-inverted configuration of the respective gripping apparatus (2);
the gripping apparatuses furthermore each having
- two pivot shafts (18, 18a) for the respective pair of gripping arms,
- an operating element (28) configured on one of the pivot shafts (18, 18a) for actuating said pivot shaft, and having
- a closing means (22) configured for moving the pair of gripping arms from the open position into the gripping position,
wherein
a part or a first section of the closing means (22) is arranged in the respective first gripping arm (4) and another part or, respectively a second section of the closing means is arranged in the second gripping arm (4a) assigned to it;
wherein
the actuating device (44) is fixed in one position and is configured so as to drive each operating element (28) between a first and a second position/angularity of the corresponding gripping apparatus (2) so that the respective gripping apparatus is shifted into the open position, held in the open position at a certain angle, and subsequently conveyed into the gripping position;
**characterized in that**
the actuating device (44) is configured as a cam apparatus made of multiple cam components displaceable in one another, which are each integrally configured or have multiple cam parts arranged on top of one another.

2. The transporting device according to Claim 1,
wherein the support plate (30) has two bearing bores (50, 52) for each gripping apparatus for mounting the pivot shafts, and wherein the effective engagement section of the pivot shafts is arranged beneath the support plate.

3. The transporting device according to Claim 1,
wherein the support plate (30) has two bearing bores (50, 52) for each gripping apparatus for mounting the pivot shafts as well as a countersink (54) connecting the two bearing bores, and wherein the effective engagement section of the pivot shafts is arranged inside the countersink.

4. The transporting device according to any one of Claims 1 to 3,
wherein each gripping apparatus (2) has an attachment element (64) for rotatably mounting the pivot shafts, wherein the attachment element is fixedly connected to the support plate (30).

5. The transporting device according to any one of the preceding claims,
**characterized in that**
the respective gripping arm (4) has a gripping section (6), wherein the gripping section (6) is pivotably mounted about a pivot axis (12) running perpendicularly to the bore (16).

6. The transporting device according to any one of the preceding claims,
**characterized in that**
the receptacle (20) is configured as a blind hole arranged between the respective gripping section (6) and the bore (16), in particular in a gripping arm body (14) of the gripping arm (4).

7. The transporting device according to any one of the preceding claims,
**characterized in that**
the closing means (22) is configured as a magnet of an attracting or a repelling pair of magnets.

8. The transporting device according to any one of the preceding claims, **characterized by** a pivot shaft (18) which is integrally configured with the respective gripping arm (4).

## Revendications

1. Dispositif de transport destiné à transporter des récipients présentant plusieurs appareils de préhension (2), présentant une plaque support (30) destinée à recevoir les appareils de préhension (2), présentant un arbre d'entraînement (48) destiné à faire tourner la plaque support (30) et présentant un dispositif de commande (44),
lesdits plusieurs appareils de préhension (2) destinés à saisir, tenir et guider des récipients en particulier de type bouteille, étant conçus avec
- à chaque fois au moins une paire de bras de préhension constituée par un premier bras de préhension (4) ainsi qu'un second bras de préhension (4a) conçu de manière identique et opposée,
le premier et le second bras de préhension (4) des paires de bras de préhension disposant à chaque fois d'un alésage (16) destiné à recevoir un élément palier (18) destiné à la fixation pivotante du bras de préhension (4) dans l'appareil de préhension (2) et à chaque fois d'un logement (20) pour un moyen de fermeture (22) destiné à déplacer le bras de préhension (4) à partir d'une position d'ouverture dans une position de préhension,
l'alésage (16) étant conçu de manière à loger un élément palier (18) fonctionnant comme arbre pivotant et à relier l'élément palier (18) sans possibilité de rotation afin de transmettre un mouvement pivotant de l'élément palier (18) au bras de préhension (4) pour le déplacement du bras de préhension (4) à partir de la position de préhension dans la position d'ouverture ;
le premier et le second bras de préhension (4) présentant au moins une section de mise en prise active, en particulier une section dentée (24) présentant des dents (26) agencées au moins par segments coaxialement autour de l'alésage (16) sur la face interne des bras de préhension pour le pivotement synchrone du bras de préhension (4) avec le bras de préhension (4a) conçu de manière identique et opposée de l'appareil de préhension (2) respectif ;
les appareils de préhension étant en outre à chaque fois conçus avec
- deux arbres pivotants (18, 18a) pour la paire de bras de préhension respective,
- un élément d'actionnement (28) conçu sur l'un des arbres pivotants (18, 18a) pour la commande de ces arbres pivotants et avec
- un moyen de fermeture (22) destiné à déplacer la paire de bras de préhension à partir de la position d'ouverture dans la position de préhension,
une partie ou une première section du moyen de fermeture (22) étant agencée dans le premier bras de préhension (4) respectif et l'autre partie ou, selon le cas, une seconde section du moyen de fermeture étant agencée dans le second bras de préhension (4a) qui lui est associé ;
le dispositif de commande (44) étant fixé dans une position et conçu de manière à commander chaque élément d'actionnement (28) entre une première et une seconde position/position angulaire de l'appareil de préhension (2) correspondant de telle sorte que l'appareil de préhension respectif est déplacé dans la position d'ouverture, maintenu sur un angle déterminé dans la position d'ouverture et ensuite transféré dans la position de préhension ;
**caractérisé en ce que** le dispositif de commande (44) est conçu sous forme d'appareil incurvé constitué par plusieurs composants incurvés pouvant être déplacés les uns dans les autres qui sont à chaque fois conçus d'une seule pièce ou qui présentent plusieurs parties incurvées agencées les unes sur les autres.

2. Dispositif de transport selon la revendication 1,
la plaque support (30) présentant, pour chaque appareil de préhension, deux alésages (50, 52) de palier destinés à loger les arbres pivotants et la section de mise en prise active des arbres pivotants étant agencée sous la plaque support.

3. Dispositif de transport selon la revendication 1,
la plaque support (30) présentant, pour chaque appareil de préhension, deux alésages (50, 52) de palier destinés à loger les arbres pivotants et un contre-alésage (54) reliant les deux alésages de palier et la section de mise en prise active des arbres pivotants étant agencée à l'intérieur du contre-alésage.

4. Dispositif de transport selon l'une des revendications 1 à 3,
chaque appareil de préhension (2) présentant un élément de garniture (64) destiné à loger de manière rotative les arbres pivotants, l'élément de garniture étant relié de manière fixe à la plaque support (30)

5. Dispositif de transport selon l'une des revendications précédentes,
**caractérisé en ce que** le bras de préhension (4) respectif présente une section de préhension (6), la section de préhension (6) étant logée de manière pivotante autour d'un axe de pivotement (12) s'étendant perpendiculairement à l'alésage (16).

6. Dispositif de transport selon l'une des revendications précédentes,
**caractérisé en ce que** le logement (20) est conçu comme un trou borgne agencé entre la section de préhension (6) respective et l'alésage (16), en particulier dans un corps (14) de bras de préhension du bras de préhension (4).

7. Dispositif de transport selon l'une des revendications précédentes,
**caractérisé en ce que** le moyen de fermeture (22) est conçu comme un aimant d'une paire d'aimants s'attirant ou se repoussant.

8. Dispositif de transport selon l'une des revendications précédentes, **caractérisé par** un arbre pivotant (18) qui est conçu d'une seule pièce avec le bras de préhension (4) respectif.
